# EUROPÄISCHE PATENTANMELDUNG

(11) **EP 4 258 599 A1**
(43) Veröffentlichungstag der Anmeldung: **11.10.2023**
(21) Anmeldenummer: 22166951.8
(22) Anmeldetag: 06.04.2022
(51) Int. Cl.: H04L 9/40, H04W 12/30, H04W 12/71

(54) **AUSBILDEN EINER KRYPTOGRAPHISCH GESCHÜTZTEN VERBINDUNG**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Die Erfindung betrifft ein Verfahren zum Ausbilden einer ersten kryptographisch geschützten Verbindung eines Geräts (D) mit einer Einheit (E), mit den Schritten:
- Ein Senden einer Verbindungsanfrage (Req) durch das Gerät (D), wobei der Verbindungsanfrage (Req) eine kryptographisch geschützte Geräteverbindungsinformation (CD-A) und eine Geräteauthentisierungsinformation (DA) zugeordnet ist,
wobei die Geräteverbindungsinformation (CD-A) angibt, welche mindestens eine zweite Verbindung von dem Gerät (D) zu mindestens einem zweiten Gerät zeitlich früher bestand,
wobei die Geräteauthentisierungsinformation (DA) das Gerät (D) authentisiert und

- Ein Ausbilden der ersten kryptographisch geschützten Verbindung des Geräts (D) mit der Einheit (E) in Abhängigkeit eines Ergebnisses eines Prüfens (P-AR) der Geräteverbindungsinformation (CD-A) und der Geräteauthentisierungsinformation (DA).

Außerdem betrifft die Erfindung ein korrespondierendes Verfahren aus Sicht der Einheit (E). Die Erfindung betrifft außerdem ein das zugehörige Gerät (D) und die zugehörige Einheit (E).

## Beschreibung

### HINTERGRUND DER ERFINDUNG

### Gebiet der Erfindung

Die vorliegende Erfindung betrifft zwei korrespondierende Verfahren zum Ausbilden einer kryptographisch geschützten Verbindung eines Geräts mit einer Einheit, wobei ein Verfahren aus Sicht des Geräts und ein Verfahren aus Sicht der Einheit beschrieben ist. Die Erfindung betrifft außerdem das zugehörige Gerät und die zugehörige Einheit.

### Beschreibung des Stands der Technik

Das einfache, initiale Einrichten einer Security-Konfiguration auf einem Gerät, insbesondere einem industriellen IoT-Gerät oder einem Mobilfunkgerät, ist eine grundlegende Zielsetzung. Dies wird auch als Provisioning, Onboarding, Bootstrapping oder Pairing bezeichnet. Dabei gibt es widersprüchliche Anforderungen: Zum einen soll es möglichst automatisiert erfolgen und dabei keine oder nur eine minimale Nutzerinteraktion erfordern, andererseits soll aber eng kontrolliert werden können, welche Geräte in einer kritischen Umgebung, insbesondere einer industriellen Umgebung, als zulässige Geräte akzeptiert werden. Weiterhin soll die Lösung flexibel in unterschiedlichen Deployment-Szenarien anwendbar sein, ohne auf eine bestimmte zentralistische Security-Infrastruktur, insbesondere eines Mobilfunkproviders oder eines Verbands von Mobilfunkprovidern oder eine bestimmte PKI-Infrastruktur, angewiesen zu sein.

Bisherige Lösungen zum initialen Einrichten schützen den Einrichtungsvorgang an sich, sodass nur ein zulässiges Einrichten erfolgt. Diese Lösungen erfordern aber komplexe manuelle oder administrative Interaktionen, insbesondere um bei jedem Einrichtungsvorgang separat eine aus Security-Sicht hinreichend starke Zulässigkeitsinformation wie ein Passwort oder ein Onboarding-Token einzugeben oder zu laden, oder sie erfordern eine Security-Infrastruktur, die die entsprechende Security-Information bereitstellt. Auch in diesem Fall muss die entsprechende Information jedoch eingerichtet werden. Auch kann dabei eine Online-Konnektivität mit öffentlichen Netzen (Internet) erforderlich sein. Solche Lösungen sind daher umständlich und in typischen industriellen Anwendungsszenarien (Industrial IoT) teilweise nur eingeschränkt anwendbar.

Eine technische Realisierung für automatisierte Zulässigkeitsprüfungen sind speziell bei einem initialen Einrichten einer Security-Konfiguration herausfordernd, da hier noch keine oder nur eine minimale Security-Konfiguration als Basis für die Zulässigkeitsprüfung vorliegt. Zulässigkeitsprüfungen beim Zugriff eines Geräts sind jedoch auch in vielfältigen anderen Anwendungsszenarien relevant, wie beim Zugriff auf einen Cloud-Service, Edge-Server, auf ein anderes IoT-Gerät, oder beim Zugriff auf ein Kommunikationsnetzwerk, insbesondere WLAN, 5G und/oder Ethernet.

Die Aufgabe der Erfindung besteht darin, eine Lösung für eine verbesserte Zulässigkeitsprüfung eines Geräts, insbesondere im Zusammenhang mit dem Einrichten einer Security-Konfiguration auf einem Gerät, bereitzustellen. Allgemein besteht ein Bedarf an einer verbesserten Möglichkeit, die Zulässigkeit eines Zugriffs zu überprüfen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ausbilden einer ersten kryptographisch geschützten Verbindung eines Geräts mit einer Einheit. Aus Sicht des zu verbindenden Geräts weist das Verfahren die folgenden Schritte auf:
- Ein Senden einer Verbindungsanfrage durch das Gerät, wobei der Verbindungsanfrage eine kryptographisch geschützte Geräteverbindungsinformation und eine Geräteauthentisierungsinformation zugeordnet ist,
   wobei die Geräteverbindungsinformation angibt, welche mindestens eine zweite Verbindung von dem Gerät zu mindestens einem zweiten Gerät zeitlich früher bestand, wobei die Geräteauthentisierungsinformation das Gerät authentisiert und
- Ein Ausbilden der ersten kryptographisch geschützten Verbindung des Geräts mit der Einheit in Abhängigkeit eines Ergebnisses eines Prüfens der Geräteverbindungsinformation und der Geräteauthentisierungsinformation.

Ein Aspekt der Erfindung besteht somit darin, eine Information kryptographisch geschützt zu bestätigen, die angibt, mit welchen anderen zweiten Geräten das zu verbindende Gerät zurückliegend verbunden war.

Bei einem Zugriff des Geräts, insbesondere auf eine Einheit wie einen Cloud-Service, ein Edge-Device, ein Steuergerät, ein weiteres IoT-Gerät, ein Kommunikationsnetzwerk, beim Zugriff auf ein Onboarding-Netzwerk, auf einen Provisionierungs-Server oder auf einen Device-Management-Server, wird die Geräteverbindungsinformation zu den zurückliegend verbundenen zweiten Geräten manipulationsgeschützt bereitgestellt.

Dadurch ergibt sich der Vorteil, dass eine Berechtigungsinformation, die einen bestimmten Zugriff durch dieses Gerät, insbesondere auf eine Einheit wie einen Provisioning-Server zum Durchführen eines Provisionierungsvorgangs, zulässt, nicht explizit für ein bestimmtes Gerät eingerichtet werden muss. Auf diese Information kann stattdessen indirekt geschlossen.

Wenn im Rahmen des definierten Vorgehens ein in Betrieb zu nehmendes Gerät entsprechend der definierten Vorgehensweise mit anderen, d.h. zweiten, Geräten, auch als Komponenten bezeichenbar, verbunden wird, so ergibt sich daraus implizit die Berechtigung, bestimmte logische Zugriffe insbesondere für ein automatisches Provisionieren von Security-Credentials auf dem Gerät durch einen Provisionierungs-Server zuzulassen.

In einer Weiterbildung der Erfindung gibt die Geräteverbindungsinformation zusätzlich an, zu welchem mindestens einem zweiten Gerät die mindestens eine Verbindung zu dem zu verbindenden Gerät aktuell weiterhin besteht. Die jeweilige zweite Verbindung kann somit zum Bestätigungszeitpunkt wieder gelöst sein oder weiterhin bestehen.

In einer weiteren Weiterbildung der Erfindung weist die Geräteverbindungsinformation:
- einen Kennzeichner, insbesondere bezüglich einem Gerätehersteller, Gerätetyp und/oder Geräteseriennummer,
   und/oder
- ein Authentisierungs-Credential, insbesondere ein Zertifikat, ein kryptographischer Schlüssel und/oder ein Passwort-Hash
des mindestens einen zweiten Geräts, zu welchen die mindestens eine zweite Verbindung bestand, auf.

Das zu verbindende Gerät ermittelt die Geräteverbindungsinformation, insbesondere wenn die zweite Verbindung besteht, und speichert diese selbst ab oder gibt sie an einen externen Speicher zum Speichern.

In einer weiteren Weiterbildung der Erfindung ist der Verbindungsanfrage zusätzlich eine Zusatzinformation zugeordnet, welche insbesondere angibt:
- zu welchem Zeitpunkt und/oder
- über welche Zeitdauer und/oder
- über welche Geräteschnittstelle und/oder
- in Kombination mit welcher mindestens einen dritten Verbindung
die mindestens eine zweite Verbindung bestand.

Die Zusatzinformation kann vom Gerät selbst lokal gespeichert werden, insbesondere in einem Flash-Speicher oder in einem Sicherheitselement des Geräts. Alternativ kann die Information vom Gerät auch in einem externen Speicher, insbesondere einem wechselbaren Speichermodul, wie einer SD-Karte, einer Datenbank, einer verteilten Datenbank (z.B. distributed Ledger, Blockchain) gespeichert werden, vorzugsweise in Form einer kryptographisch geschützten Transaktionsdatenstruktur. Eine in einem externen Speicher gespeicherte Information umfasst vorzugsweise weiterhin eine Identifizierungsinformation des Geräts, z.B. einen Kennzeichner oder ein Authentisierungs-Credential des Geräts.

In einer weiteren Weiterbildung der Erfindung wird die Geräteverbindungsinformation von:
- dem Gerät und/oder
- einer externen Einheit
bereitgestellt.

Das Bereitstellen der Geräteverbindungsinformation erfolgt vorzugsweise durch das Gerät selbst, das diese Information zusammen mit einem Zugriff oder einem Zugriff zugeordnet bereitstellt. Eine Geräteverbindungsinformation kann alternativ oder zusätzlich durch ein verbundenes Gerät, durch eine separate Einheit, insbesondere einem Web-Service, oder durch eine verteilte Datenbank bereitgestellt werden.

In einer weiteren Weiterbildung der Erfindung erfolgt das Ausbilden der kryptographisch geschützten Verbindung des Geräts mit der Einheit außerdem in Abhängigkeit einer zweiten Geräteverbindungsinformation, wobei die erste Geräteverbindungsinformation und die zweite Geräteverbindungsinformation auf Übereinstimmung geprüft werden. Dies ist besonders vorteilhaft, wenn die Geräteverbindungsinformation von dem Gerät und einer externen Einheit bereitgestellt werden.

In dieser Variante werden mehrere von unterschiedlichen Stellen bereitgestellte Geräteverbindungsinformationen auf Übereinstimmung geprüft. So kann eine vorherige zweite Verbindung nur dann als zutreffend berücksichtig werden, wenn sie nicht nur vom Gerät selbst bestätigt wird, sondern zusätzlich auch von dem jeweils zuvor verbundenen zweiten Gerät oder wenn sie zusätzlich durch eine verteilte Datenbank bestätigt wird. Dies hat den Vorteil eines höheren zu erreichenden Sicherheitsniveaus.

In einer weiteren Weiterbildung der Erfindung ist das zweite Gerät als:
- ein Peripheriegerät und/oder
- ein Erweiterungsmodul und/oder
- ein Werkzeug einer Werkzeugmaschine und/oder
- ein IoT-Gerät und/oder
- ein mit dem Gerät mechanisch verbundenes, vorzugsweise nicht zerstörungsfrei lösbares zweites Gerät
ausgebildet.

Manche verbundenen zweite Geräte können somit mit dem zugreifenden Gerät auch fest verbunden sein, insbesondere in diesem fest verbaut sein, insbesondere in einem internen Erweiterungs-Slot oder Steckplatz oder ggf. auch verklebt, eingegossen oder verlötet sein.

In einer weiteren Weiterbildung der Erfindung ist die Einheit als:
- ein Server und/oder
- ein Cloud-Service und/oder
- ein Edge-Device und/oder
- ein Steuergerät und/oder
- eine Steuerungsfunktion und/oder
- ein weiteres, drittes Gerät, insbesondere ein zweites IoT-Gerät und/oder
- ein Kommunikationsnetzwerk und/oder
- ein Onboarding-Netzwerk und/oder
- ein Provisionierungs-Server und/oder
- ein Device-Management-Server
ausgebildet.

Der vom Gerät ausgehende Zugriff und somit die erste kryptographisch geschützte Verbindung kann insbesondere einen der folgenden Fälle betreffen:
- Netzwerkzugangsauthentisierung (WLAN, 5G Mobilfunk, IEEE 802.1X)
- Authentisierung gegenüber Provisioning Server, Device Management Server
- Authentisierung gegenüber Steuerrechner / Steuerungsfunktion (virtualisierter Steuerrechner, z.B. auf Industrial Edge Device)
- Authentisierung gegenüber anderem Gerät, Edge-Device, Backend-Cloud

In einer weiteren Weiterbildung der Erfindung werden für das Prüfen der Verbindungsanfrage Regeln herangezogen, basierend auf welchen über:
- ein Zulassen oder
- ein eingeschränktes Zulassen
des Ausbildens der ersten kryptographisch geschützten Verbindung des Geräts mit der Einheit entschieden wird.

Abhängig davon, mit welchen anderen, zweiten Geräten das betroffene, zugreifende Gerät zurückliegend verbunden wurde, wird der Zugriff zugelassen, modifiziert, d.h. eingeschränkt zugelassen oder abgewiesen.

Insbesondere kann das Ausbilden der ersten kryptographisch geschützten Verbindung und damit der Zugriff zugelassen werden, wenn das zugreifende Gerät in einem vorgebbaren zurückliegenden Zeitfenster mit einem bestimmten anderen Gerät verbunden war. Allgemein kann ausgewertet werden, um die Zulässigkeit eines Zugriffs zu ermitteln, mit welchen anderen, zweiten Geräten, wann, wie lange, an welchem Ort, in welcher Reihenfolge, das zugreifende Gerät verbunden war.

Dadurch muss eine Berechtigungsinformation nicht explizit für ein bestimmtes Gerät eingerichtet werden, die einen bestimmten Zugriff durch eine Einheit, insbesondere auf einen Provisioning-Server zum Durchführen eines Provisionierungsvorgangs, zulässt. Auf diese Information kann stattdessen indirekt geschlossen werden. Dazu müssen lediglich Regeln definiert werden, die den üblichen, zulässigen Vorgehensweisen zur Inbetriebnahme eines Geräts in einer bestimmten Anwendungsumgebung entsprechen.

Das vorangehende Verbinden des Geräts über die zweite Verbindung mit einem oder mehreren zweiten Geräten kann insbesondere auf folgende Arten erfolgen:
- Anstecken von Peripheriegeräten über eine lokale Schnittstelle, z.B. USB, SPI, RS232, SD-Card-Interface
- Herstellen einer Stromübertragung mit einer Stromversorgungseinheit (insbesondere USB Power Delivery oder eine drahtlose/induktive Stromversorgung wie z.B. eine Wireless Qi Ladeschnittstelle).
- Anstecken von Erweiterungsmodule (z.B. über einen Rückwandbus verbundene, angesteckte Erweiterungsmodule einer Industriekomponente wie z.B. einer speicherprogrammierbaren Steuerung PLC). Das Erweiterungsmodul kann insbesondere ein Kommunikationsmodul sein (z.B. ein 5G-Kommunikationsmodul).
- Anstecken oder Montieren eines Werkzeugs bei einer Werkzeugmaschine (z.B. Fräskopf, Bohrer)
- Verbindungen mit einem Netzwerk (Verbindung mit Mobilfunknetzwerk, z.B. einem öffentlichen Mobilfunknetzwerk, einem 5G-Campus-Netzwerk, einem 5G-Netzwerk-Slice, einem bestimmten WLAN-Netzwerk mit Netzwerkzugangsauthentisierung, einem bestimmten Enterprise-Netzwerk mit IEEE 802.1X Netzwerkzugangskontrolle,
- Kryptographisch geschützte, authentisierte Verbindung mit Servern, Cloud-Diensten, anderen Geräten über ein Kommunikationsnetzwerk (Internet, Enterprise-Netzwerk, Fabriknetz, Campus-Netzwerk).

In einer weiteren Weiterbildung der Erfindung erfolgt
- Das Senden der Verbindungsanfrage an die Einheit und/oder
- Das Prüfen der Geräteverbindungsinformation und/oder der Geräteauthentisierungsinformation durch die Einheit.
Alternativ können die genannten Schritte durch eine weitere Einheit, wie einen weiteren Server, erfolgen.

In einer weiteren Weiterbildung der Erfindung ist die Geräteauthentisierungsinformation als ein Geräte-Fingerprint des zweiten Geräts ausgebildet. Vorzugsweise kann sich das zweite Gerät, mit welchem die zweite Verbindung aufgebaut werden soll, kryptographisch gegenüber dem ersten gerät authentisieren, wie z.B. von USB 3.0 oder PCIe bekannt.

Weiterhin ist es möglich, dass das zweite Gerät anhand eines Geräte-Fingerprints identifiziert wird, d.h. anhand einer indirekten gerätespezifischen Eigenschaft, insbesondere eine analoge Eigenschaft der Geräteschnittstelle, die von physikalischen Eigenschaften von verwendeten elektronischen Schnittstellenbausteinen abhängt oder die sich durch Fertigungstoleranzen ergeben, insbesondere Abweichungen von Widerständen, Kapazitäten, Induktivitäten, von ihrem nominellen Wert. Dabei kann eine Frequenzabhängigkeit berücksichtigt werden.

Vorzugsweise kann sich das Gerät, das zu der Einheit die erste Verbindung aufgebaut, kryptographisch authentisieren, wie z.B. TLS, DTLS, IPsec/IKEv2, MACsec oder OPC UA bekannt.

In einer weiteren Weiterbildung der Erfindung ist die Geräteauthentisierungsinformation kryptographisch geschützt, insbesondere durch eine kryptographische Signatur. In einer Variante kann sie auch durch eine symmetrische kryptographische Prüfsumme, d.h. einen Nachrichtenauthentisierungscode (MAC, message authentication code) geschützt sein, oder als Verifiable Credential oder Verifiable Presentation ausgestaltet sein.

Die Erfindung umfasst außerdem ein Gerät zur Ausführung des vorgehend beschriebenen erfindungsgemäßen Verfahrens, aufweisend:
- Eine Sendeeinheit, ausgebildet die Verbindungsanfrage zu senden, wobei der Verbindungsanfrage die kryptographisch geschützte Geräteverbindungsinformation und die Geräteauthentisierungsinformation zugeordnet ist,
   wobei die Geräteverbindungsinformation die mindestens eine zweite Verbindung von dem Gerät zu dem mindestens einem zweiten Gerät, welche zeitlich früher bestand, angibt,
   wobei die Geräteauthentisierungsinformation das Gerät authentisiert und
- Eine Verbindungseinheit, ausgebildet die erste kryptographisch geschützte Verbindung des Geräts mit der Einheit in Abhängigkeit des Ergebnisses des Prüfens der Geräteverbindungsinformation und der Geräteauthentisierungsinformation auszubilden.

Die Erfindung umfasst außerdem ein Verfahren zum Ausbilden einer ersten kryptographisch geschützten Verbindung einer Einheit mit einem Gerät, aus Sicht der Einheit mit den Schritten:
- Ein Empfangen einer Verbindungsanfrage des Geräts, wobei der Verbindungsanfrage eine kryptographisch geschützte Geräteverbindungsinformation und eine Geräteauthentisierungsinformation zugeordnet ist,
   wobei die Geräteverbindungsinformation angibt, welche mindestens eine zweite Verbindung von dem Gerät zu mindestens einem zweiten Gerät zeitlich früher bestand,
   wobei die Geräteauthentisierungsinformation das Gerät authentisiert und
- Ein Ausbilden der ersten kryptographisch geschützten Verbindung der Einheit mit dem Gerät in Abhängigkeit eines Ergebnisses eines Prüfens der Geräteverbindungsinformation und der Geräteauthentisierungsinformation.

Die Erfindung umfasst außerdem eine Einheit zur Ausführung des vorgehend beschriebenen erfindungsgemäßen Verfahrens, aufweisend:
- Eine Empfangseinheit, ausgebildet eine Verbindungsanfrage des Geräts zu empfangen, wobei der Verbindungsanfrage die kryptographisch geschützte Geräteverbindungsinformation und die Geräteauthentisierungsinformation zugeordnet ist,
   wobei die Geräteverbindungsinformation die mindestens eine zweite Verbindung von dem Gerät zu dem mindestens einem zweiten Gerät, welche zeitlich früher bestand, angibt,
   wobei die Geräteauthentisierungsinformation das Gerät authentisiert und
- Eine Verbindungseinheit, ausgebildet, die erste kryptographisch geschützte Verbindung der Einheit mit dem Gerät in Abhängigkeit des Ergebnisses des Prüfens der Geräteverbindungsinformation und der Geräteauthentisierungsinformation auszubilden.

Zusammengefasst bietet die Erfindung den Vorteil, dass eine Berechtigungsinformation, die einen bestimmten Zugriff durch das Gerät, insbesondere auf eine Einheit wie einen Provisioning-Server zum Durchführen eines Provisionierungsvorgangs, zulässt, nicht explizit für ein bestimmtes Gerät eingerichtet werden muss. Auf diese Information kann stattdessen indirekt geschlossen werden.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

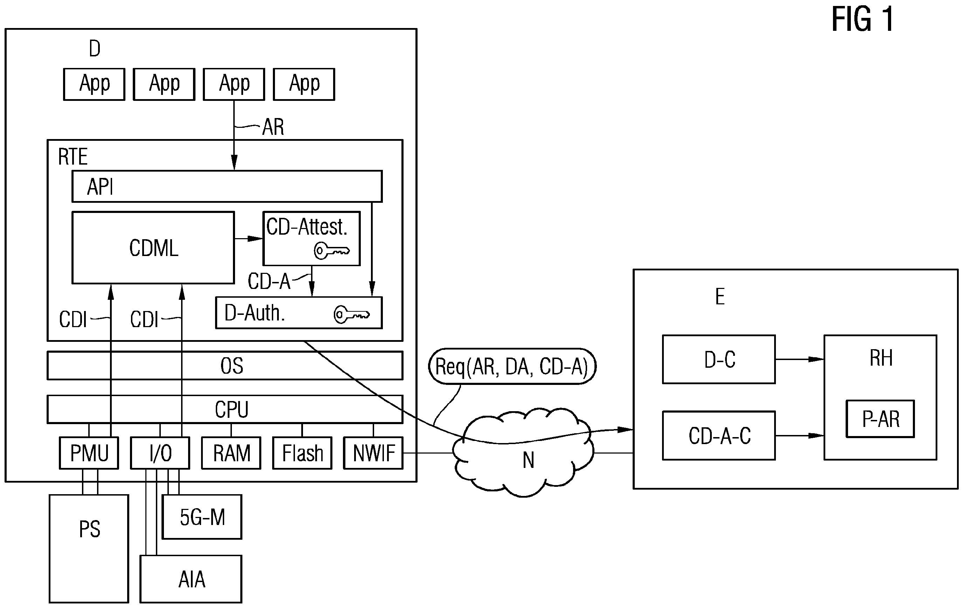

Es zeigt
- Fig. 1: eine schematische Darstellung eines Geräts und einer Einheit zur Ausführung der erfindungsgemäßen Verfahren.

### DETAILLIERTE BESCHREIBUNG DER ERFINDUNG

Fig. 1 zeigt ein Gerät D zur Ausführung des erfindungsgemäßen Verfahrens aus Sicht des Geräts D und eine Einheit E zur Ausführung des korrespondierenden erfindungsgemäßen Verfahrens aus Sicht der Einheit E.

Das Gerät, ist in Fig. 1 gezeigt als ein industrielles IoT-Gerät D (Device) mit einer App-Ausführungsumgebung RTE (Runtime Environment) zur Ausführung von Applikationen App.

Weiterhin sind:
- ein Betriebssystem OS (operating system),
- ein Prozessor CPU,
- eine erste Speichereinheit RAM,
- eine zweite Speichereinheit Flash,
- eine Ein-/Ausgabeeinheit I/O zum Verbinden von Sensoren und/oder Aktuatoren oder Erweiterungsmodulen sowie
- eine Netzwerkschnittstelle NWIF (network N interface) vorgesehen.

Weiterhin ist eine Stromverwaltungseinheit PMU (Power Management Unit) vorgesehen, die mit einer externen Stromversorgung PS (Power Supply) verbunden ist.

Über IO-Schnittstellen (IO: input/output) sind ein externes 5G-Kommunikationsmodem 5G-M und ein AI-Beschleuniger AIA (artificial intelligence accellerator), z.B. eine Hardwarebasierte Inference-Engine, verbunden.

Über eine API-Schnittstelle (API:_ Application Programming Interface) kann eine App eine Anforderung AR (App Request, insbesondere zum Provisionieren einer App-Konfiguration oder einer Geräte-Konfiguration), der App-Ausführungsumgebung RTE stellen. Die App kann auf dem Gerät fest, z.B. als Teil einer Geräte-Firmware, vorliegen, oder die App kann eine auf das Gerät geladene und installierte App sein.

Die App-Ausführungsumgebung RTE verwaltet erfindungsgemäß eine Information über zurückliegend und/oder aktuell verbundene zweite Geräte (Connected Device Monitor and Ledger CDML). Die Geräteverbindungsinformation verbundener zweiter Geräte, die auch als Komponenten bezeichnet werden können, wird vorzugsweise von dem zweiten Gerät, d.h. der Komponente, direkt bereitgestellt, z.B. eine Information zu Hersteller, Gerätetyp, Seriennummer.

Vorzugsweise kann sich ein zweites Gerät, d.h. eine Komponente, kryptographisch authentisieren, wie z.B. von USB 3.0 oder PCIe bekannt. Weiterhin ist es möglich, dass eine verbundene Komponente anhand eines Geräte-Fingerprints identifiziert wird, d.h. anhand einer indirekten gerätespezifischen Eigenschaft (z.B. analoge Eigenschaften der Geräteschnittstelle, die von physikalischen Eigenschaften von verwendeten elektronischen Schnittstellenbausteinen abhängt, die sich durch Fertigungstoleranzen ergeben, z.B. Abweichungen von Widerständen, Kapazitäten, Induktivitäten, von ihrem nominellen Wert).

Vorzugsweise kann sich das Gerät, d.h. das industrielles IoT-Gerät D, kryptographisch authentisieren, wie z.B. TLS, DTLS, IPsec/IKEv2, MACsec oder OPC UA bekannt.

Diese Information (optional gefiltert und vorverarbeitet) wird kryptographisch geschützt bestätigt CD-Attest, indem die kryptographisch geschützte Geräteverbindungsinformation, auch als Connected-Device-Attestierungsinformation CD-A bezeichenbar, gebildet wird, die unter Nutzung eines Attestierungsschlüssels gebildet wird. Weiterhin kann sich das Gerät unter Nutzung eines Geräteauthentisierungsschlüssels authentisieren D-Auth. Die beiden Schlüssel sind vorzugsweise unterschiedlich; grundsätzlich kann jedoch auch ein gemeinsamer Schlüssel für die Geräteauthentisierung und für die Connected-Device-Attestierung verwendet werden. Diese Funktionalität kann unter Nutzung eines Secure Elements (z.B. Crypto Controller, Sicherheitsprozessor, Trusted Platform Module), einer vertrauenswürdigen Ausführungsumgebung (Trusted Execution Environment) oder einer Confidential-Computing-Enklave (z.B. Intel SGX Enklave) realisiert sein. Es ist möglich, für die Geräteauthentisierung und die Connected-Device-Attestierung ein gemeinsames Secure Element oder eine gemeinsame vertrauenswürdigen Ausführungsumgebung oder eine gemeinsame Confidential-Computing-Enklave zu verwenden. Es ist ebenso möglich, für die Geräteauthentisierung und die Connected-Device-Attestierung separate Secure Elemente oder separate vertrauenswürdigen Ausführungsumgebungen oder separate Confidential-Computing-Enklaven zu verwenden. Dies hat den Vorteil, dass die Geräteauthentisierung und die Connected-Device-Attestierung voneinander separiert sind, sodass ein besonders hoher Manipulationsschutz erreicht wird.

Die Anfrage-Nachricht Req wird an die Einheit E, insbesondere ein weiteres Gerät E bzw. einen Dienst E, übermittelt. Sie umfasst neben dem eigentlichen Anforderung AR der App die Geräteauthentisierungsinformation DA und die erfindungsgemäße Connected-Device-Attestierungsinformation CD-A, die beschreibt, welche anderen, zweiten Geräte insbesondere über eine lokale Geräteschnittstelle mit dem zu verbindenden Gerät D zurückliegend verbunden waren. Die Connected-Device-Attestierungsinformation CD-A und die Geräteauthentisierungsinformation D werden von dem Gerät E bzw. Dienst E, mit welchem verbunden werden soll, überprüft CD-A-C, D-C (check) und davon abhängig wird die Anfrage Req im Request Handler RH bearbeitet P-AR (Process AR), abgewiesen P-AR, oder modifiziert P-AR, d.h. eingeschränkt bearbeitet P-AR.

Die Anfrage Req umfasst vorzugsweise die drei Elemente: Anforderung AR der App, Geräteauthentisierungsinformation DA und Connected-Device-Attestierungsinformation CD-A. Es ist jedoch auch möglich, dass diese drei Elemente referenziert werden, z.B. mittels einer URI oder einem kryptographischen Identifier, insbesondere kryptographischer Hashwert des jeweiligen Elements. Insbesondere kann die erfindungsgemäße Connected-Device-Attestierungsinformation CD-A auch separat übermittelt oder bereitgestellt werden, sodass sie einer Anfrage Req zuordenbar ist, insbesondere indem eine Referenz auf die Connected-Device-Attestierungsinformation CD-A in der Anfragenachricht enthalten ist.

Die Geräteauthentisierungsinformation DA kann auch eine Appspezifische Geräteauthentisierungsinformation sein. So kann das Gerät D beispielsweise für unterschiedliche Apps unterschiedliche Geräteauthentisierungsschlüssel verwenden. Abhängig davon, von welcher App eine Anforderung AR stammt, wird ein der jeweiligen App zugeordneter Geräteauthentisierungsschlüssel ausgewählt oder ermittelt und für die Bildung der Geräteauthentisierungsinformation verwendet.

Die Geräteauthentisierungsinformation DA der Anfragenachricht kann eine digitale Signatur sein. Die digitale Signatur kann die Anfragenachricht, die die Anforderung AR und die Attestierung bzw. die Attestierungs-Referenz umfasst, schützen. Ebenso ist es möglich, dass die Geräteauthentisierungsinformation und die Attestierung bzw. die Attestierungs-Referenz bei einer Authentisierung- und Schlüsselvereinbarung verwendet werden, um einen kryptographisch geschützten, authentisierten Übertragungskanal aufzubauen, über den die Anforderung AR übertragen wird.

Die Anfrage kann insbesondere betreffen:
- Registrierung des Geräts in einer Gerätedatenbank (als zulässiges Gerät)
- Ausstellen eines Credentials (digitales Zertifikat, Security-Token) für das anfragende Gerät
- Generieren und Bereitstellen eines kryptographischen Schlüssels für das anfragende Gerät
- Bilden einer Blockchain-Transaktion (Distributed Ledger, verteilte Datenbank) durch ein zugreifendes Blockchain-Orakel (d.h. das zugreifende Gerät realisiert eine Blockchain-Client-/Blockchain-Wallet)
- Aufbau einer Netzwerkzugangsverbindung (z.B. PDP-Kontext oder PDU-Session eines Mobilfunksystems) zu einer Netzwerkinfrastruktur (Netzzugangskontrolle, 3GPP 5G Primary Authentication)
- Anfordern einer Netzwerkzugangsverbindung (z.B. PDP-Kontext oder PDU-Session eines Mobilfunksystems) für den Zugriff auf einen Slice der Netzwerkinfrastruktur (z.B. 3GPP 5G Secondary Authentication)
- Anfordern eines App-Downloads, Firmware-Updates
- Bereitstellen oder Anfordern eines Sensor-Messwerts, der eine physikalische Größe eines technischen Systems erfasst (z.B. Temperatur, Kraft, Druck, Bewegungsgeschwindigkeit, Flussgeschwindigkeit, Durchflussmenge, Drehzahl, Drehmoment)
- Bereitstellen oder Anfordern eines Steuerkommandos zur Ansteuerung eines Aktors, um eines technischen Systems zu beeinflussen (z.B. Werkzeugmaschine, Antrieb, Heizelement) .
- Bereitstellen oder Anfordern von Rezepturdaten oder Projektierungsdaten für die Konfiguration eines Steuergeräts, einer Maschine oder einer Anlage.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Ausbilden einer ersten kryptographisch geschützten Verbindung eines Geräts (D) mit einer Einheit (E), mit den Schritten:
- Ein Senden einer Verbindungsanfrage (Req) durch das Gerät (D), wobei der Verbindungsanfrage (Req) eine kryptographisch geschützte Geräteverbindungsinformation (CD-A) und eine Geräteauthentisierungsinformation (DA) zugeordnet ist,
wobei die Geräteverbindungsinformation (CD-A) angibt, welche mindestens eine zweite Verbindung von dem Gerät (D) zu mindestens einem zweiten Gerät zeitlich früher bestand,
wobei die Geräteauthentisierungsinformation (DA) das Gerät (D) authentisiert und
- Ein Ausbilden der ersten kryptographisch geschützten Verbindung des Geräts (D) mit der Einheit (E) in Abhängigkeit eines Ergebnisses eines Prüfens (P-AR) der Geräteverbindungsinformation (CD-A) und der Geräteauthentisierungsinformation (DA).

2. Verfahren nach Anspruch 1,
wobei die Geräteverbindungsinformation (CD-A) zusätzlich angibt, zu welchem mindestens einem zweiten Gerät die mindestens eine zweite Verbindung aktuell besteht.

3. Verfahren nach einem der vorhergehenden Ansprüche,
wobei die Geräteverbindungsinformation (CD-A):
- einen Kennzeichner, insbesondere bezüglich einem Gerätehersteller, Gerätetyp und/oder Geräteseriennummer,
und/oder
- ein Authentisierungs-Credential, insbesondere ein Zertifikat, ein kryptographischer Schlüssel und/oder ein Passwort-Hash
des mindestens einen zweiten Geräts, zu welchen die mindestens eine zweite Verbindung bestand, aufweist.

4. Verfahren nach einem der vorhergehenden Ansprüche,
wobei der Verbindungsanfrage (req) zusätzlich eine Zusatzinformation zugeordnet ist, welche insbesondere angibt:
- zu welchem Zeitpunkt und/oder
- über welche Zeitdauer und/oder
- über welche Geräteschnittstelle und/oder
- in Kombination mit welcher mindestens einen dritten Verbindung
die mindestens eine zweite Verbindung bestand.

5. Verfahren nach einem der vorhergehenden Ansprüche, wobei die Geräteverbindungsinformation (CD-A) von:
- dem Gerät (D) und/oder
- einer externen Einheit
bereitgestellt wird.

6. Verfahren nach einem der vorhergehenden Ansprüche,
wobei das Ausbilden der kryptographisch geschützten Verbindung des Geräts (D) mit der Einheit (E) außerdem in Abhängigkeit einer zweiten Geräteverbindungsinformation erfolgt,
wobei die erste Geräteverbindungsinformation (CD-A) und die zweite Geräteverbindungsinformation auf Übereinstimmung geprüft werden.

7. Verfahren nach einem der vorhergehenden Ansprüche, wobei das zweite Gerät als:
- ein Peripheriegerät und/oder
- ein Erweiterungsmodul und/oder
- ein Werkzeug einer Werkzeugmaschine und/oder
- ein IoT-Gerät und/oder
- ein mit dem Gerät (D) mechanisch verbundenes zweites Gerät
ausgebildet ist.

8. Verfahren nach einem der vorhergehenden Ansprüche, wobei die Einheit (E) als:
- ein Server (E) und/oder
- ein Cloud-Service (E) und/oder
- ein Edge-Device (E) und/oder
- ein Steuergerät (E) und/oder
- eine Steuerungsfunktion (E) und/oder
- ein drittes Gerät (E), insbesondere ein zweites IoT-Gerät (E) und/oder
- ein Kommunikationsnetzwerk (E) und/oder
- ein Onboarding-Netzwerk (E) und/oder
- ein Provisionierungs-Server (E) und/oder
- ein Device-Management-Server (E)
ausgebildet ist.

9. Verfahren nach einem der vorhergehenden Ansprüche, wobei für das Prüfen (P-AR) der Verbindungsanfrage (req) Regeln herangezogen werden, basierend auf welchen über:
- ein Zulassen oder
- ein eingeschränktes Zulassen
des Ausbildens der ersten kryptographisch geschützten Verbindung des Geräts (D) mit der Einheit (E) entschieden wird.

10. Verfahren nach einem der vorhergehenden Ansprüche, wobei:
- Das Senden der Verbindungsanfrage (req) an die Einheit (E) erfolgt und/oder
- Das Prüfen (P-AR) der Geräteverbindungsinformation (CD-A) und/oder der Geräteauthentisierungsinformation (DA) durch die Einheit (E) erfolgt.

11. Verfahren nach einem der vorhergehenden Ansprüche,
wobei die Geräteauthentisierungsinformation (DA) als ein Geräte-Fingerprint des Geräts (D) ausgebildet ist.

12. Verfahren nach einem der vorhergehenden Ansprüche,
wobei die Geräteauthentisierungsinformation (DA) kryptographisch geschützt ist, insbesondere durch eine kryptographische Signatur.

13. Gerät (D) zur Ausführung eines Verfahrens nach einem der Ansprüche 1 bis 12,
aufweisend:
- Eine Sendeeinheit, ausgebildet die Verbindungsanfrage (req) zu senden, wobei der Verbindungsanfrage (rea) die kryptographisch geschützte Geräteverbindungsinformation (CD-A) und die Geräteauthentisierungsinformation (DA) zugeordnet ist,
wobei die Geräteverbindungsinformation (CD-A) die mindestens eine zweite Verbindung von dem Gerät (D) zu dem mindestens einem zweiten Gerät, welche zeitlich früher bestand, angibt,
wobei die Geräteauthentisierungsinformation (DA) das Gerät (D) authentisiert und
- Eine Verbindungseinheit, ausgebildet die erste kryptographisch geschützte Verbindung des Geräts (D) mit der Einheit (E) in Abhängigkeit des Ergebnisses des Prüfens (P-AR) der Geräteverbindungsinformation (req) und der Geräteauthentisierungsinformation (DA) auszubilden.

14. Verfahren zum Ausbilden einer ersten kryptographisch geschützten Verbindung einer Einheit (E) mit einem Gerät (D), mit den Schritten:
- Ein Empfangen einer Verbindungsanfrage (req) des Geräts (D), wobei der Verbindungsanfrage (req) eine kryptographisch geschützte Geräteverbindungsinformation (CD-A) und eine Geräteauthentisierungsinformation (DA) zugeordnet ist,
wobei die Geräteverbindungsinformation (CD-A) angibt, welche mindestens eine zweite Verbindung von dem Gerät (D) zu mindestens einem zweiten Gerät zeitlich früher bestand,
wobei die Geräteauthentisierungsinformation (DA) das Gerät (D) authentisiert und
- Ein Ausbilden der ersten kryptographisch geschützten Verbindung der Einheit (E) mit dem Gerät (D) in Abhängigkeit eines Ergebnisses eines Prüfens (P-AR) der Geräteverbindungsinformation (CD-A) und der Geräteauthentisierungsinformation (DA).

15. Einheit (E) zur Ausführung eines Verfahrens nach Anspruch 14,
aufweisend:
- Eine Empfangseinheit, ausgebildet eine Verbindungsanfrage (req) des Geräts (D) zu empfangen, wobei der Verbindungsanfrage (req) die kryptographisch geschützte Geräteverbindungsinformation (CD-A) und die Geräteauthentisierungsinformation (DA) zugeordnet ist,
wobei die Geräteverbindungsinformation (CD-A) die mindestens eine zweite Verbindung von dem Gerät (D) zu dem mindestens einem zweiten Gerät, welche zeitlich früher bestand, angibt,
wobei die Geräteauthentisierungsinformation (DA) das Gerät (D) authentisiert und
- Eine Verbindungseinheit, ausgebildet, die erste kryptographisch geschützte Verbindung der Einheit (E) mit dem Gerät in Abhängigkeit des Ergebnisses des Prüfens (P-AR) der Geräteverbindungsinformation (CD-A) und der Geräteauthentisierungsinformation (DA) auszubilden.
